# EUROPEAN PATENT APPLICATION

(11) **EP 4 533 948 A1**
(43) Date of publication of application: **09.04.2025**
(21) Application number: 23731727.6
(22) Date of filing: 17.05.2023
(51) Int. Cl.: A01N 25/10, A01N 33/02, A01N 37/44, A01N 43/08, A01N 43/16, A01N 43/22, A01P 19/00, A01N 25/00

(54) **FLY ATTRACTANT COMPOSITION**

(30) Priority: 24.05.2022 ES 202230440
(71) Applicant: CONSEJO SUPERIOR DE INVESTIGACIONES CIENTIFICAS (CSIC), 28006 Madrid (ES); SEDQ HEALTHY CROPS, S.L., 08005-Barcelona (ES)
(72) Inventor: LÓPEZ ROMERO, Sergio, 08034 Barcelona (ES); QUERO LÓPEZ, Carmen, 08034 Barcelona (ES); ACIN VIU, Patricia, 08005 Barcelona (ES); BARROT FEIXAT, Mireia, 08005 Barcelona (ES); GÓMEZ ZUBIAUR, Alberto, 08005 Barcelona (ES)
(74) Representative: Pons
(86) International application number: PCT/ES2023/070314
(87) International publication number: WO 2023/227811

(57) **Abstract**

The present invention relates to a composition comprising one or more compounds of formula **I,** wherein groups R₁, R₂ and n have the meaning described in the description, and a food component, useful as a fly attractant, particularly for tephritid fruit flies of the genus *Bactrocera.*

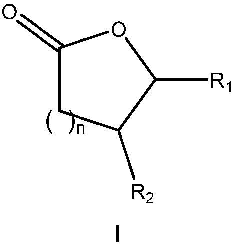

## Description

The present invention relates to a composition comprising one or more compounds of formula I and a food component, useful as a fly attractant, particularly for tephritid fruit flies belonging to the genus *Bactrocera.*

### BACKGROUND OF THE INVENTION

The fly species included in the genus *Bactrocera* Macquart (Diptera: Tephritidae) are considered relevant agricultural pests worldwide due to the incidence on multiple crops. In particular, *Bactrocera oleae* (Gmelin), commonly known as the olive fruit fly, is a carpophagous and monophagous species of the genus *Olea* L. (Lamiales: Oleaceae), being the most devastating pest of the cultivated varieties of the olive tree (*Olea europaea* L.) in all those geographical areas in which it is present: the Mediterranean basin, Canary Islands, southeastern Africa, western Asia, California and Mexico. In the Mediterranean region, estimates of the drop-in production due to *Bactrocera oleae* have been made, with figures around 30-40% (Zalom, F.G., R.A. Van Steenwyk, H.J. Burrack, and M.W. Johnson. 2003. Olive fruit fly. Integrated pest management for home gardeners and landscape professionals. Pest Notes, University of California, Agriculture and Natural Resources 74112). The main damage caused by the insect on the crop is derived from the females piercing the fruit and the subsequent development of the larva inside the fruit. The female uses her ovipositor to deposit the egg on the surface of the olive, and after the hatching of the larva, it penetrates therein to complete its development until the pupal stage. Due to the feeding of the larva on the mesocarp, the content of the olive is severely affected, and the introduction of fungi is favored, which together results in a decrease in the quality and stability of the processed oil. In addition, the production of the quantity of table olives is also affected by the stings of the female, since they can cause premature falling, making them unfeasible for commercialization.

Traditionally, the control of the species has been based on the use of organophosphate insecticides such as dimethoate and fenthion, subsequently being replaced with other types of insecticides such as pyrethroids or spinosad. However, cases of resistance to certain treatments have occasionally been reported (Kakani, E.G., N.E. Zygouridis, K.T.

Tsoumani, N. Seraphides, F.G. Zalom and K.D. Mathiopoulos. 2010. Spinosad resistance development in wild olive fruit fly Bactrocera oleae (Diptera: Tephritidae) populations in California. Pest Manag. Sci. 66: 447-453). This fact, together with the possible prevalence of residues in the environment, on the consumer product or the risk of exposure of applicators, has encouraged the search for alternative control methods that are more sustainable with the environment. Within this group of alternatives is massive insect capture and "attract and kill", in which different attractants are used to eliminate the largest possible number of individuals consistent with the phenology of the species. Two of the most commonly used types of attractants are protein hydrolysates and ammonium salts, which are attractive to both sexes given the implication they have in the development and acquisition of sexual maturity of the insect. The effectiveness of these attractants increases with the use of semiochemicals, these being understood as substances produced and/or emitted into the environment by a certain organism that modify the behavior of the receiving organism. In this respect the chemical ecology of the insect is of particular interest, since, unlike the other species of the genus, where males attract females, in *Bactrocera oleae* females are the sex responsible for mediating the sexual communication of the species, emitting the pheromone complex that is highly attractive to males. This pheromone complex is primarily made up of the compounds 1,7-dioxaspiro[5.5]undecane (hereinafter referred to as olean), *α*-pinene, nonanal and ethyl dodecanoate (Mazomenos B.E. and G.E. Haniotakis 1981. A multicomponent female sex pheromone of Dacus oleae Gmelin: isolation and bioassay. J. Chem. Ecol. 7: 1561-1573), olean being the main component of the mixture, and individually the one with the greatest attractiveness compared to the rest of the compounds. To that end, the addition of olean has complemented protein hydrolysates and ammonium salts, resulting in a more attractive combination for males. Examples of formulations of this type are the commercial products FLYPACK^{®} DACUS from SEDQ Healthy Crops (Spain) and ECO-TRAP from VIORYL S.A. (Greece). This entire group of attractants is usually accompanied by the use of a collecting device (understood hereinafter to be a trap) adapted to capture the insect both by its color and its shape.

Despite the aforementioned biotechnological advances, the different massive capture methodologies available to date do not represent a sufficiently effective tool to guarantee the protection of crops, therefore it is finally subject to the application of complementary phytosanitary treatments. Given this situation, the need has arisen to develop alternative formulations that improve the effectiveness of current systems, maximizing the number

of captures so as to reduce the number of necessary insecticide applications and the detrimental effects derived from such applications.

Thus, it would be desirable to have a composition that causes an increase in the number of captured flies and to minimize or eliminate the use of complementary toxic insecticides and phytosanitary products to protect a crop.

### DESCRIPTION OF THE INVENTION

In a first aspect, the present invention relates to a composition comprising:
- one or more compounds of formula I: 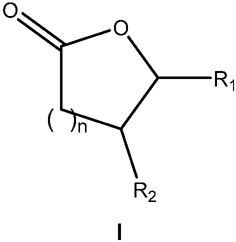 wherein:
   R₁ represents C₁-C₅ alkyl;
   R₂ represents H or C₁-C₅ alkyl; and
   n represents an integer between 1 and 3; and
- a food component.

In another embodiment, the invention relates to the previously defined composition, comprising one or two compounds of formula **I.**

In another embodiment, the invention relates to the previously defined composition, wherein, for the compound of formula **I,** R₁ represents C₁-C₄ alkyl, preferably C₁-C₃ alkyl, and more preferably wherein R₁ represents methyl or ethyl.

In another embodiment, the invention relates to the previously defined composition, wherein, for the compound of formula **I,** R₂ represents H or C₁-C₄ alkyl, preferably wherein R₂ represents H, methyl or ethyl, and more preferably wherein R₂ represents H.

In another embodiment, the invention relates to the previously defined composition, wherein, for the compound of formula I, n represents 1 or 2.

In another embodiment, the invention relates to the previously defined composition, wherein, for the compound of formula I:
R₁ represents C₁-C₄ alkyl, preferably C₁-C₃ alkyl, and more preferably wherein R₁ represents methyl or ethyl;
R₂ represents H or C₁-C₅ alkyl, preferably wherein R₂ represents H or C₁-C₄ alkyl, more preferably wherein R₂ represents H, methyl or ethyl, and more preferably wherein R₂ represents H; and
n represents 1 or 2.

In another embodiment, the invention relates to the previously defined composition, wherein the compound of formula I is selected from: 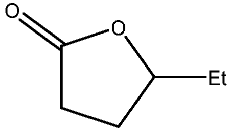 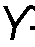 -hexalactone; and 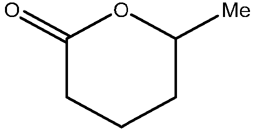 ∂-hexalactone.

In another embodiment, the invention relates to the previously defined composition, wherein the food component is an ammonium salt or a protein hydrolysate.

In another embodiment, the invention relates to the previously defined composition, wherein the food component is an ammonium salt selected from diammonium phosphate, ammonium carbonate, ammonium bicarbonate, ammonium sulfate, ammonium acetate, and any combination thereof, and more preferably ammonium bicarbonate.

In another embodiment, the invention relates to the previously defined composition, wherein the food component is a protein hydrolysate obtained from corn, soy or sugar cane.

In another embodiment, the invention relates to the previously defined composition, wherein:
for the compound of formula **I:**
R₁ represents C₁-C₄ alkyl, preferably C₁-C₃ alkyl, and more preferably wherein R₁ represents methyl or ethyl;
R₂ represents H or C₁-C₄ alkyl, preferably wherein R₂ represents H, methyl or ethyl, and more preferably wherein R₂ represents H; and
n represents 1 or 2, and
the food component is an ammoniac salt, and preferably the food component is an ammonium salt selected from diammonium phosphate, ammonium carbonate, ammonium bicarbonate, ammonium sulfate, ammonium acetate, and any combination thereof, and more preferably ammonium bicarbonate.

In another embodiment, the invention relates to the previously defined composition, wherein:
the compound of formula **I** is selected from 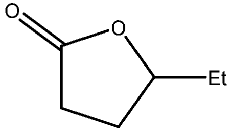
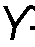 -hexalactone; and 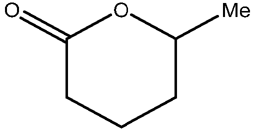
∂-hexalactone, and
the food component is ammonium bicarbonate.

In another embodiment, the invention relates to the previously defined composition, comprising:
- a compound of formula **I,** which is: 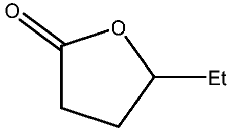 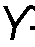 -hexalactone, and
- a food component which is an ammoniac salt, and preferably a food component which is ammonium bicarbonate.

In another embodiment, the invention relates to the previously defined composition, comprising:
- a compound of formula I, which is: 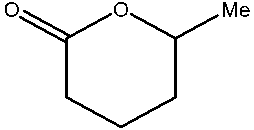 ∂-hexalactone, and
- a food component which is an ammoniac salt, and preferably a food component which is ammonium bicarbonate.

In another embodiment, the invention relates to the previously defined composition, comprising:
- a first compound of formula I, which is: 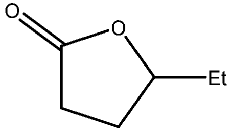 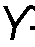 -hexalactone;
- a second compound of formula **I,** which is: 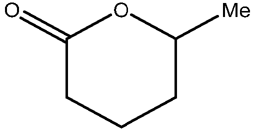 ∂-hexalactone, and
- a food component which is an ammoniac salt, and preferably a food component which is ammonium bicarbonate.

In another embodiment, the invention relates to the previously defined composition, wherein:
for the compound of formula **I:**
R₁ represents C₁-C₄ alkyl, preferably C₁-C₃ alkyl, and more preferably wherein R₁ represents methyl or ethyl;
R₂ represents H or C₁-C₄ alkyl, preferably wherein R₂ represents H, methyl or ethyl, and more preferably wherein R₂ represents H; and
n represents 1 or 2, and
the food component is a protein hydrolysate, and preferably it is selected from that obtained from corn, soy or sugar cane. In another embodiment, the invention relates to the previously defined composition, wherein:
the compound of formula I is selected from 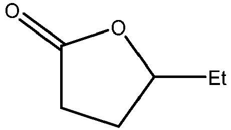
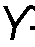 -hexalactone; and 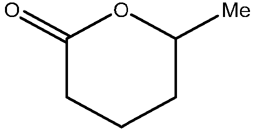
∂-hexalactone, and
the food component is a protein hydrolysate, and preferably the protein hydrolysate obtained from corn, soy or sugar cane.

In another embodiment, the invention relates to the previously defined composition, comprising:
- a compound of formula I, which is: 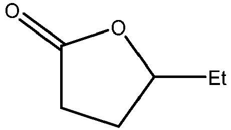 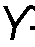 -hexalactone, and
- the food component is a protein hydrolysate, and preferably the protein hydrolysate obtained from corn, soy or sugar cane.

In another embodiment, the invention relates to the previously defined composition, comprising:
- a compound of formula I, which is: 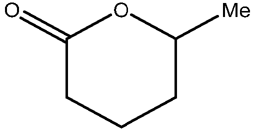 ∂-hexalactone, and
- the food component is a protein hydrolysate, and preferably the protein hydrolysate obtained from corn, soy or sugar cane.

In another embodiment, the invention relates to the previously defined composition, comprising:
- a first compound of formula I, which is: 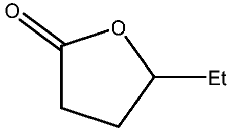 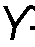 *-*hexalactone;
- a second compound of formula I, which is: 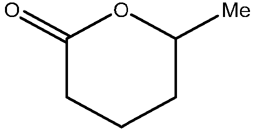 ∂-hexalactone, and
- the food component is a protein hydrolysate, and preferably the protein hydrolysate obtained from corn, soy or sugar cane.

In another embodiment, the invention relates to the previously defined composition, wherein the amount of the compound of formula **I** is comprised in a ratio selected from between 1:1 and 1:1000 by weight with respect to the weight of the food component, and preferably between 1:100 and 1:500 by weight with respect to the weight of the food component.

In another embodiment, the invention relates to the previously defined composition, which further comprises one or more antioxidant agents, preferably wherein the antioxidant agents are selected from butylated hydroxytoluene, butylated hydroxyanisole, tert-butylhydroquinone, ascorbic acid, citric acid, propyl gallate, tocopheryl acetate, and a combination of any of them, and more preferably wherein the antioxidant agent is in a ratio of between 1:1000 and 1:10 by weight with respect to the weight of the compound of formula **I,** and even more preferably wherein the antioxidant agent is in a ratio of between 1:1000 and 1:100 by weight with respect to the weight of the compound of formula **I.**

In another embodiment, the invention relates to the previously defined composition, which further comprises an ultraviolet light protective agent, preferably wherein the ultraviolet light protective agent is selected from cinnamic acid, anthranilates, benzimidazoles, benzophenones, dibenzoylmethane and salicylates, more preferably wherein the ultraviolet light protective agent is selected from cinnamic acid, methyl anthranilate, 2-hydroxy-4-methoxybenzophenone, dibenzoylmethane and 2-ethylhexyl salicylate, even more preferably wherein the ultraviolet light protective agent is in a ratio of between 1:500 and 1:5 by weight with respect to the weight of the compound of formula **I,** and even more preferably wherein the ultraviolet light protective agent is in a ratio of between 1:500 and 1:50 by weight with respect to the weight of the compound of formula **I.**

In another embodiment, the invention relates to the previously defined composition, wherein the compound of formula I and the food component are independently contained in one or more diffusers, preferably wherein the compound of formula **I** and the food component are independently contained in two diffusers, and more preferably wherein the compound of formula **I** is contained in one diffuser (diffuser A) and the food component is contained in another diffuser (diffuser B).

In another embodiment, the invention relates to the previously defined composition, wherein diffuser A is made up of a material selected from polyethylene, polypropylene, polystyrene, polyurethane, polyether, polyamide, paraffins, waxes and/or resins, and preferably wherein diffuser A is made up of a material selected from polyethylene, polyester and/or polyamide.

In another embodiment, the invention relates to the previously defined composition, wherein diffuser B is made up of a material selected from polyethylene, polypropylene, polystyrene, polyurethane, cellulose, rubber, starch and/or cellulose, and preferably wherein diffuser B is made up of a material selected from polyethylene and/or cellulose.

Another aspect of the invention relates to the use of the composition defined above as a fly attractant, preferably as an attractant for tephritid fruit flies, more preferably as an attractant for flies of the genus *Bactrocera,* even more preferably as attractants for flies of the species *Bactrocera oleae,* and even more preferably as an attractant for male and female flies of the species *Bactrocera oleae.*

Another aspect of the invention relates to the use of the composition defined above for the control of the population of flies by means of their attraction and massive capture, preferably of tephritid fruit flies, more preferably of flies of the genus *Bactrocera,* even more preferably of flies of the species *Bactrocera oleae,* and even more preferably of male and female flies of the species *Bactrocera oleae.*

In another embodiment, the invention relates to the use of the composition defined above for the control of the population of flies by means of their attraction and massive capture on olive crops.

Another aspect of the invention relates to the use of one or more compounds of formula I as defined above, as a fly attractant, preferably as an attractant for tephritid fruit flies, more preferably as an attractant for flies of the genus *Bactrocera,* even more preferably as attractants for flies of the species *Bactrocera oleae,* and even more preferably as an attractant for male and female flies of the species *Bactrocera oleae.*

Another aspect of the invention relates to the use of one or more compounds of formula **I** as defined above, for the control of the population of flies by means of their attraction and massive capture, preferably of tephritid fruit flies, more preferably of flies of the genus *Bactrocera,* even more preferably of flies of the species *Bactrocera oleae,* and even more preferably of male and female flies of the species *Bactrocera oleae.*

In another embodiment, the invention relates to the use of one or more compounds of formula I as defined above for the control of the population of flies by means of their attraction and massive capture on olive crops.

Throughout the invention, "C₁-C₅ alkyl" and "C₁-C₄ alkyl" as groups or parts of a group refer to an alkyl chain of 1 to 5 atoms and 1 to 4 carbon atoms, respectively, linear or branched. Examples include, among others, methyl, ethyl, propyl, isopropyl, butyl, sec-butyl, tert-butyl and pentyl.

The term "food component" refers to any organic or inorganic substance not emitted by the insect and that is attractive due to the presence of essential components for optimal physiological and reproductive development of the insect, especially the females. Examples include, among others, the "ammonium salts" and "hydrolyzed proteins" referred to in the invention.

The term "ammonia salt" refers to any organic or inorganic salt that contains the cation NH₄⁺ and allows the release of nitrogen. Examples include, among others, di-ammonium phosphate, ammonium carbonate, ammonium sulfate, ammonium bicarbonate or any mixture of two or more of said ammonium salts.

The term "protein hydrolysate" refers to any protein source of animal or vegetable origin that is hydrolyzed in the form of peptides of different sizes. Examples include, among others, hydrolyzed proteins obtained from corn, soybean, or sugar cane.

"Antioxidant compound" refers to any substance that prevents or decreases the oxidation process of a compound of formula I. Examples include, among others, butylated hydroxytoluene, butylated hydroxyanisole, tert-butylhydroquinone, ascorbic acid, citric acid, propyl gallate, tocopherols and acetates derived from same, and/or a combination of any of them, and preferably butylated hydroxytoluene.

"Ultraviolet radiation protective agent" refers to any substance that protects the compound of formula **I** against deterioration or degradation derived from exposure to solar radiation. Examples include, among others, cinnamic acid, anthranilates, benzimidazoles, benzophenones (for example 2-hydroxy-4-methoxybenzone), dibenzoylmethanes and salicylates.

The term "diffuser" refers to any support of organic or inorganic material that contains and favors its emission into the environment of each element of the invention in a passive, controlled and optimal manner.

Throughout the invention, where reference is made to "the composition is contained in one or more diffusers" or to "the composition is contained in two diffusers", the term "contain" refers to the incorporation of the composition of the invention in its respective diffuser, particularly, said incorporation can be carried out by means of a method of absorption, adsorption, deposition, spraying or coating.

Throughout the description and the claims, the word "comprises" and its variants do not intend to exclude other technical features, additives, components or steps. For those skilled in the art, other objects, advantages and features of the invention may be partially deduced from both the description and the embodiment of the invention. The following examples and figures are provided by way of illustration and are not intended to limit the present invention.

### BRIEF DESCRIPTION OF THE FIGURES

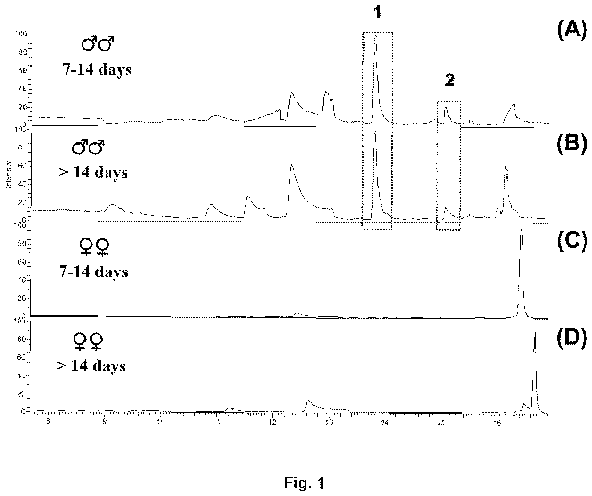

**Figure 1** shows the profile of volatiles obtained by solid phase microextraction of virgin *Bactrocera oleae* males (A, 7-14 days; B, > 14 days) and females (C, 7-14 days; D, > 14 days) from the colony bred under laboratory conditions. Two specific compounds are observed in males and absent in females, the identification of which corresponds to 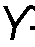 -hexalactone (1) and *δ*-hexalactone (2).

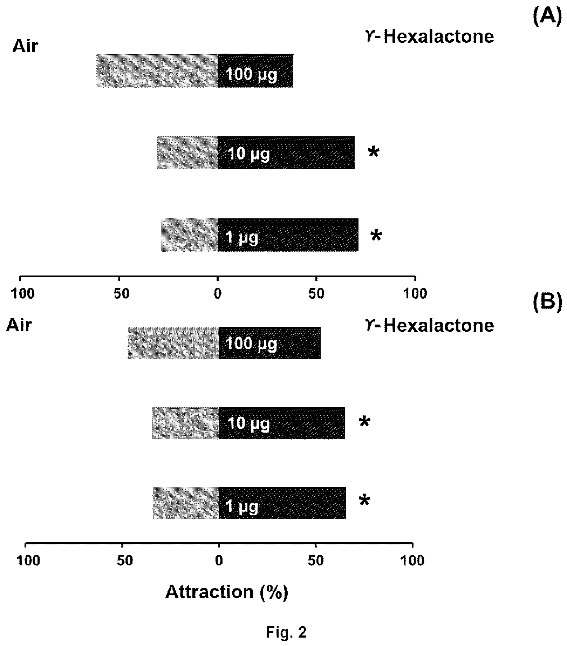

**Figure 2** shows the behavioral response (expressed as the percentage of attraction) under laboratory conditions of virgin *Bactrocera oleae* (A) males (n = 40-60) and (B) females (n = 40) when simultaneously exposed to 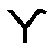 -hexalactone (1, 10 and 100 µg; black bars) and a stream of air purified with activated carbon (grey bars). An asterisk next to a bar indicates a significant preference for the 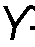 -hexalactone compound (Chi-squared test, *p* < 0.05).

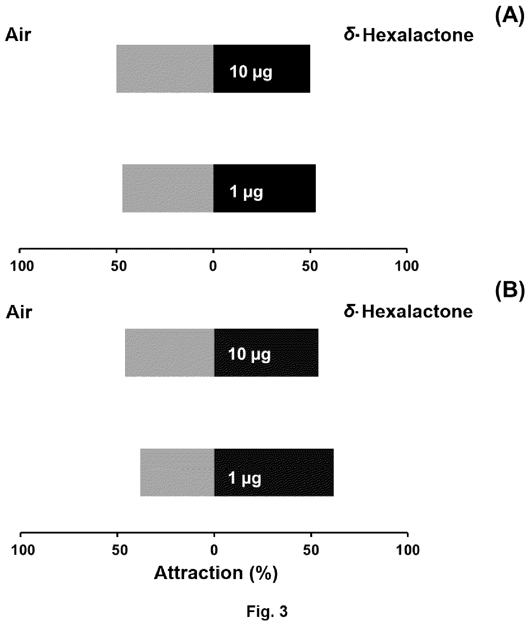

**Figure 3** shows the behavioral response (expressed as the percentage of attraction) under laboratory conditions of virgin *Bactrocera oleae* (A) males (n = 60-80) and (B) females (n = 40-60) when simultaneously exposed to *δ*-hexalactone (1 and 10 µg; black bars) and a stream of air purified with activated carbon (grey bars). No significant differences were observed in the preference towards one or the other stimulus for either sex (Chi-squared test, p > 0.05).

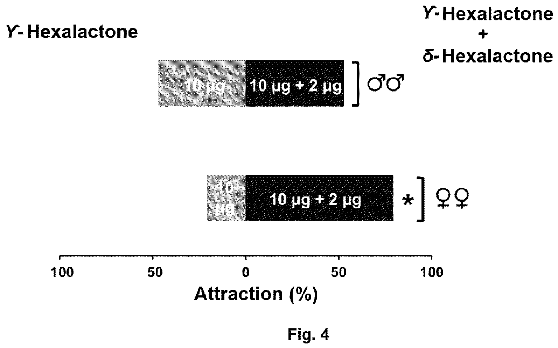

**Figure 4** shows the behavioral response (expressed as the percentage of attraction) under laboratory conditions of virgin *Bactrocera oleae* males (n = 20) and females (n = 25) by being simultaneously exposed to the combination of 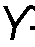 -hexalactone (10 µg) and *δ*-hexalactone (2 µg) (black bars) vs. 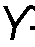 -hexalactone (10 µg; gray bars). An asterisk next to a bar indicates a significant preference for the mixture of 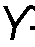 -hexalactone and *δ-*hexalactone (Chi-squared test, p < 0.05).

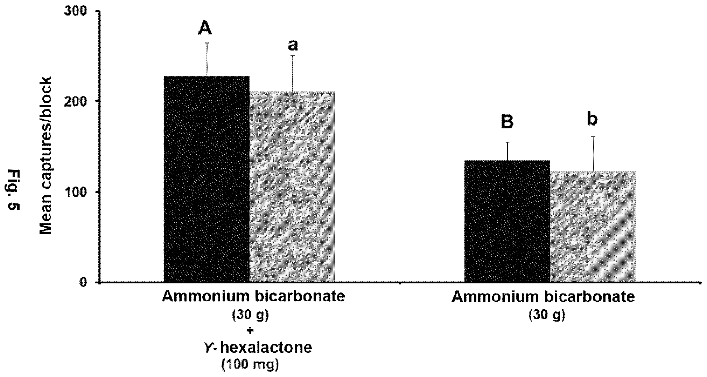

**Figure 5** shows the mean number (+ standard error of the mean) of flies of both sexes captured per block (n=3) in yellow FLYPACK model traps containing the combination of ammonium bicarbonate (30 g) and 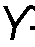 -hexalactone (100 mg), or only ammonium bicarbonate (30 g). The bars with a different letter within a sex indicate significant differences in the number of captures between the two evaluated attractants (Student's *t*-test, *p* < 0.05).

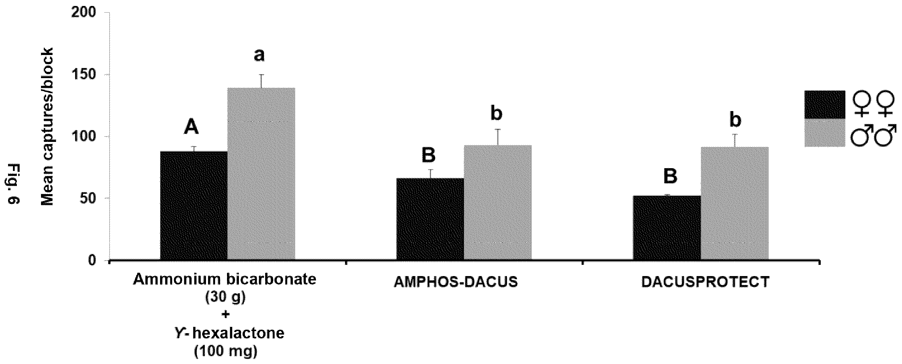

**Figure 6** shows the mean number (+ standard error of the mean) of flies of both sexes captured per block (n=3) in yellow FLYPACK model traps containing the combination of ammonium bicarbonate (30 g) and 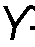 -hexalactone (100 mg), or with two commercial standard attractants [AMPHOS-DACUS and DACUSPROTECT]. The bars with a different letter within a sex indicate significant differences in the number of captures between the two evaluated attractants (analysis of variance, followed by Fisher's *post-hoc* LSD test, *p* < 0.05).

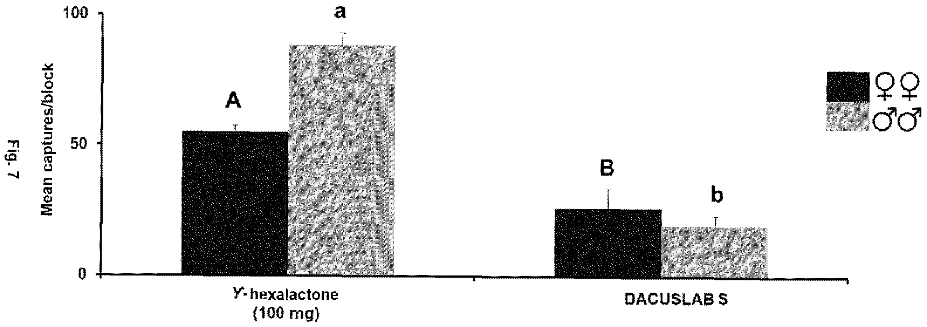

**Figure 7** shows the mean number (+ standard error of the mean) of flies of both sexes captured per block (n=4) in yellow FLYPACK model traps containing 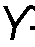 -hexalactone (100 mg), or the commercial standard DACUSLAB S. The bars with a different letter within a sex indicate significant differences in the number of captures between the two evaluated attractants (Student's *t*-test, *p* < 0.05).

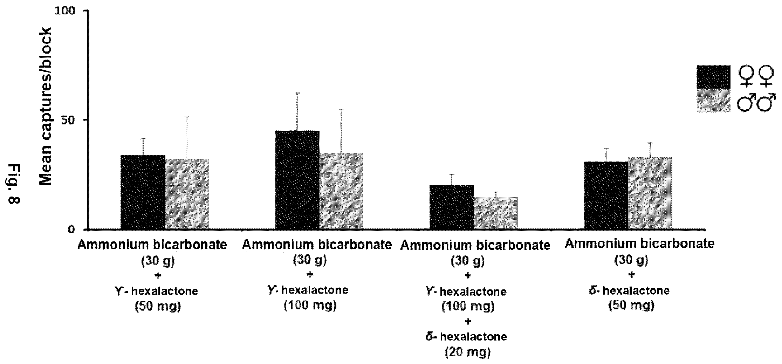

**Figure 8** shows the mean number (+ standard error of the mean) of flies of both sexes captured per block (n=3) in yellow FLYPACK model traps containing the combination of ammonium bicarbonate (30 g) and 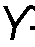 -hexalactone or two different amounts thereof (50 and 100 mg), the ternary combination of ammonium bicarbonate (30 g), 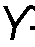 -hexalactone (100 mg) and *δ*-hexalactone (20 mg), and ammonium bicarbonate (30 g) and *δ-*hexalactone (50 mg). No significant differences are observed between the different attractants in the number of captures of both sexes (analysis of variance, *p* > 0.05).

### EXAMPLES

Next, the invention will be illustrated by means of assays carried out by the inventors that demonstrate the effectiveness of the product of the invention.

**Example 1: Detection by means of solid phase microextraction of** 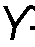 **-hexalactone and *δ*-hexalactone in virgin *Bact rocera oleae* males**

The detection of the two compounds was performed by means of the volatile collection by solid phase microextraction from virgin *Bactrocera oleae* specimens of both sexes and two age categories (7-14 days and > 14 days, with five replicates per category) from a breeding colony maintained at the facilities of the Institute for Advanced Chemistry of Catalonia (IQAC-CSIC). Each volatile collection consisted of the exposure to an adsorbent fiber (divinylbenzene/carboxen/polydimethylsiloxane, 50/30 µm, Merck-Sigma Aldrich, Madrid, Spain) of 15 specimens of a certain sex and age, and introduced into a transparent glass vial. The exposure time to the fiber was 24 hours under controlled temperature conditions (24 ± 1 °C), relative humidity (55 ± 5%) and photoperiod (16 hours light: 8 hours darkness). After the exposure time to the fiber elapsed, it was injected into a Thermo Finnigan Trace 2000 GC gas chromatograph (Thermo Fisher Scientific, Madrid, Spain) coupled to a Trace MS quadrupole mass spectrometer (Thermo Fisher Scientific), in electron impact mode (70 eV). The chromatograph was equipped with a TR-5MS capillary column (30 m × 0.25 mm ID × 0.25 µm; Thermo Fisher Scientific), programming the oven with the following temperature cycle: 40 °C maintained for five minutes, an increase of 5 °C/min up to 180°C, and a second increase of 15 °C/min until reaching a final temperature of 300 °C, which was maintained for five minutes. The injector was maintained at 270 °C, while the temperature of the ionization source was 200 °C. The identification of the two male-specific compounds was carried out by comparing the mass spectra obtained with those available in a publicly accessible database (National Institute of Standards and Technology-NIST, United States) and commercial synthetic samples (≥98% for each compound, Merck-Sigma Aldrich), confirming the identity thereof as 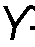 -hexalactone and *δ*-hexalactone.

As can be observed in Figure 1, the profiles of volatiles obtained for the males reflect the presence of 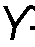 -hexalactone (1) and *δ*-hexalactone (2), which were detected in all samples analyzed, regardless of the age of the individuals. On the contrary, the presence of any of the compounds was not detected in the volatile collections carried out on the females.

**Example 2: Activity of** 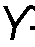 **-hexalactone and *δ*-hexalactone on the behavior of virgin *Bactrocera oleae* males and females under laboratory conditions**

The response of virgin *Bactrocera oleae* males (n = 40-80) and females (n = 40-60) to 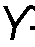 -hexalactone and *δ*-hexalactone under laboratory conditions was obtained by conducting two-choice behavior tests. In a first instance, the intrinsic activity of each compound was evaluated, recording the response of each insect individually when subjected simultaneously to a specific amount of compound (*Υ*-hexalactone: 1, 10 y 100 µg; *δ*-hexalactone: 1 and 10 µg) and an airflow previously purified in activated carbon in countercurrent with respect to the position of the insect. Immediately afterwards, the response of both sexes (males = 20, females = 25) to *Y*-hexalactone (10 µg) vs. the combination of 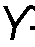 -hexalactone (10 µg) and *δ*-hexalactone (2 µg) was determined to check if the inclusion of *δ*-hexalactone exerted any increase in the activity of 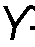 -hexalactone *per* se. This 5:1 ratio between compounds was established according to the relationship between the areas of both compounds estimated from the chromatographic profiles obtained.

To perform the aforementioned behavior tests, the same methodological process was followed, using a two-way glass olfactometer, provided with a main arm (10 cm long × 18 mm internal diameter) and two secondary arms (8 cm long × 5 mm internal diameter) arranged at an angle of 90°, and placed upright. At the end of one arm of the olfactometer, a filter paper (Whatman^{®}, 2.5 cm diameter, Merck-Sigma Aldrich) on which the product had been dispensed at the amount evaluated was placed, and a purified airflow was circulated at 300 ml/min, while on the opposite arm only an air stream was circulated at the same flow rate. On the contrary, in the comparative test between the activity of both lactones, one of the arms housed the combination of both and the remaining arm only 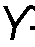 -hexalactone. Each insect was placed at the base of the main arm and given a response time of five minutes to determine its preference for one arm or the other, so that if, once it had chosen one of the arms, it entered said arm for more than 3 cm, this was considered a positive response. The position of the arms was alternated every five insects evaluated to avoid any bias due to a possible directionality in the insect response. The number of insects that made a choice for one arm or the other was analyzed using the Chi-squared test at a level of significance of α = 0.05. All the tests were carried out at the Institute for Advanced Chemistry of Catalonia (IQAC-CSIC) under controlled environmental conditions (temperature 23 ± 1 °C and relative humidity 50 ± 10%) and apical and homogeneous illumination of 300 lux.

Figure 2 illustrates the response of males and females regarding the three amounts of 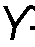 -hexalactone tested, reflecting that both sexes show a positive response to the compound. On the other hand, it is observed that neither of the two sexes exhibits attraction towards the *δ*-hexalactone at any of the amounts tested, as shown in Figure 3. Lastly, the combination of 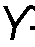 -hexalactone and *δ*-hexalactone shows a significantly attractive effect on females compared to 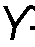 -hexalactone alone, according to the results shown in Figure 4. On the contrary, the males do not show significant preference for one stimulus or the other in this second case.

**Example 3: Effect of the combination of ammonium bicarbonate and** 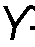 -**hexalactone on the attraction of *Bactrocera oleae* in field tests**

The attraction of the binary combination of ammonium bicarbonate and 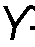 -hexalactone on *Bactrocera oleae* was evaluated by means of several field tests carried out between 2018 and 2021 in different olive tree plots. On the one hand, a first test (Test 1) in which the improvement in the number of fly captures was determined by combining ammonium bicarbonate (30 g) together with 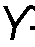 -hexalactone (in an amount of 100 mg) with respect to the use of ammonium bicarbonate (30 g) alone was carried out. This test was arranged in an olive tree plot in Sant Llorenç d'Hortons (Barcelona) from September to November 2018.

After the achievement of this first point, in Tests 2 and 3 the attractiveness of both the claimed binary combination and only the 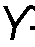 -hexalactone compound was compared to that exhibited by commercial standard attractants AMPHOS-DACUS (Ao Midori Biocontrol S.L.) and DACUSLAB S and DACUSPROTECT (SEDQ Healthy Crops S.L.). AMPHOS-DACUS consists of a food component of the insect, while DACUSLAB S is made up of olean, the insect's major pheromone compound and the efficacy of which as an attractant is increased in the presence of ammonium bicarbonate, Therefore, this binary combination constitutes the commercial standard with the commercial name DACUSPROTECT. Test 2 was developed in an olive grove located in Sant Llorenç d'Hortons (Barcelona) during the months of October and November 2018, and in it the comparison of the following attractants: ammonium bicarbonate (30 g) + 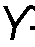 -hexalactone (100 mg), AMPHOS-DACUS y DACUSPROTECT, was carried out. In the second comparative test (Test 3) carried out in Ásperes (France) from July to November 2021, the evaluation of the attraction exerted by 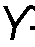 -hexalactone (100 mg) against the commercial standard DACUSLAB S was carried out. On the other hand, the response of *Bactrocera oleae* to different attractants that contain ammonium bicarbonate together with 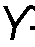 -hexalactone and/or *δ*-hexalactone was determined in an olive tree plot located in Sant Pere de Riudebitlles (Barcelona), from November to December 2018 (Test 4). The different attractants evaluated consisted of different combinations of ammonium bicarbonate (30 g) together with i) 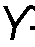 -hexalactone (50 mg), ii) 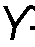 -hexalactone (100 mg), iii) *δ*-hexalactone (50 mg), and iv) 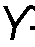 -hexalactone (100 mg) plus *δ*-hexalactone (20 mg).

The same experimental design was followed for all four tests, with the arrangement in blocks (three in the case of Tests 1-2-4, and four in Test 3) of yellow FLYPACK model traps that contained the different attractants, so that all of them were present in each block. The separation between traps within the same block was at least 25 m, this also being the minimum separation distance between blocks. The content of the traps was checked weekly throughout the entire duration of the tests, each trap being rotated clockwise, and the total number of *Bactrocera oleae* captured was counted, segregating them by sex. For the comparative analysis between the different attractants in relation to the total number of captured flies, the mean number of individuals of both sexes captured per block was considered. The data was analyzed using an analysis of variance (ANOVA) followed by a Fisher's *post-hoc* LSD test, for a level of significance of 0.05, except in Tests 1 and 3, where a Student's t-test was applied under the same level of significance.

The results obtained in the different field tests show that the specific compound produced and emitted by the males, in other words, 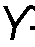 -hexalactone, shows a high degree of attraction on both sexes of the insect, both when used individually and in combination with ammonium bicarbonate, substantially improving the number of flies of both sexes captured with respect to the rest of the commercial attractants considered. First, as shown in Figure 5, the average number of males attracted by the binary combination of ammonium bicarbonate and 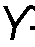 -hexalactone shows significantly greater attraction than ammonium bicarbonate-mediated captures alone, both in terms of the number of males (*t =* -2.802; d.f. = 4, *p =* 0.049), and females (*t =* -3.901; d.f. = 4, *p =* 0.018).

On the other hand, Figures 6-7 show that the mean number of individuals of both sexes captured when using 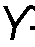 -hexalactone both in combination with ammonium bicarbonate (Figure 6) and individually (Figure 7) is significantly higher than the performance of the commercial standards considered. Specifically, in Test 2 the combination of ammonium bicarbonate and 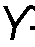 -hexalactone captured a mean of 138.0 males and 88.0 females per block, while the mean captures of the commercial attractant AMPHOS-DACUS were 93.0 males and 66.3 females, and the attractant DACUSPROTECT captured an average of 91.7 males and 52.0 females per block (Figure 6). These differences in the number of captures obtained by the commercial attractants with respect to the average captures by the combination of ammonium bicarbonate and 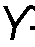 -hexalactone lead to the detection of significant differences for both males (*F*_{2.6}= 5.763; *p* = 0.040) and for females (*F*_{2.6}= 15.213; *p =* 0.004). Similarly, in Test 3 the mean number of *Bactrocera oleae* individuals captured by 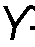 -hexalactone are higher than the mean number mediated by DACUSLAB S, both for males (88.3 *vs.* 19.8 average captures, *t =* 11.192; d.f. = 6, *p* < 0.001) and for females (55.0 *vs.* 26.3 average captures, *t* = 3.654; d.f. = 6, *p* = 0.011). On the other hand, as seen in Figure 8, the analysis of variance carried out on the average captures of Test 4 reveals that the presence of *δ*-hexalactone together with ammonium bicarbonate or together with ammonium bicarbonate and 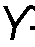 -hexalactone does not mean a significant increase in the number of male captures (*F*_{3.8} = 0.142; *p* = 0.932) and females *F*_{3.8} = 1.043; *p* = 0.425) with respect to that obtained by the combination of ammonium bicarbonate and 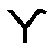 -hexalactone.

## Claims

1. A composition comprising:
- one or more compounds of formula I: 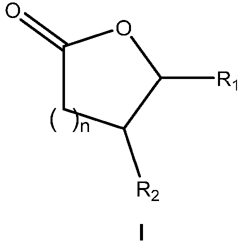 wherein:
R₁ represents C₁-C₃ alkyl;
R₂ represents H or C₁-C₅ alkyl; and
n represents 1; and
- a food component, which is an ammonium salt.

2. The composition according to claim 1, wherein, for the compound of formula **I,** R₁ represents methyl or ethyl.

3. The composition according to any of claims 1 or 2, wherein, for the compound of formula **I,** R₂ represents H, methyl or ethyl.

4. The composition according to claim 3, wherein, for the compound of formula **I,** R₂ represents H.

5. The composition according to any of claims 1 to 4, wherein the compound of formula **I is:** 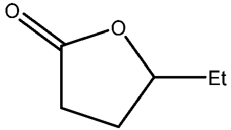 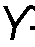 -hexalactone.

6. The composition according to any of claims 1 to 5, wherein the food component is an ammonium salt selected from diammonium phosphate, ammonium carbonate, ammonium bicarbonate, ammonium sulfate, ammonium acetate, and any combination thereof.

7. The composition according to claim 6, wherein the ammonium salt is ammonium bicarbonate.

8. Use of the composition according to any of claims 1 to 7 as a fly attractant.

9. Use of the composition according to any of claims 1 to 8 to control the fly population.

10. Use of the composition according to any of claims 8 or 9 as an attractant for tephritid fruit flies.

11. Use of the composition according to claim 10 as an attractant for insects of the genus *Bactrocera.*

12. Use of the composition according to claim 11 s attractants for the species *Bactrocera oleae.*

13. Use of one or more compounds of formula I: 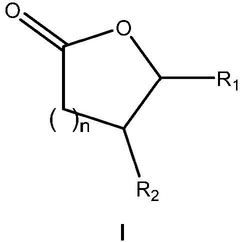 wherein:
R₁ represents C₁-C₃ alkyl;
R₂ represents H or C₁-C₅ alkyl; and
n represents 1,
as a fly attractant.
